# EUROPÄISCHE PATENTANMELDUNG

(11) **EP 3 799 315 A1**
(43) Veröffentlichungstag der Anmeldung: **31.03.2021**
(21) Anmeldenummer: 20198282.4
(22) Anmeldetag: 25.09.2020
(51) Int. Cl.: H04B 1/3822, H04B 1/00

(54) **MOBILE KOMMUNIKATIONSEINRICHTUNG MIT EINER NOTRUFSENDEEINRICHTUNG**

(30) Priorität: 25.09.2019 DE 102019006712
(71) Anmelder: Keesmann, Till, 69115 Heidelberg (DE)
(72) Erfinder: Keesmann, Till, 69115 Heidelberg (DE)
(74) Vertreter: Clemens, Gerhard

(57) **Zusammenfassung**

Eine mobile Kommunikationseinrichtung (10) mit einer Notrufsendeeinrichtung (20) zur Absendung von Notrufsignalen (H1, H2, H3) in einem Notfall, wobei die Notrufsignale der Notrufsendeeinrichtung (20) mit einer Notrufempfangseinrichtung (40) zum Empfangen und Auswerten der Notrufsignale in Kommunikationsverbindung bringbar sind und die Notrufempfangseinrichtung (40) mit einer Hilfeeinrichtung (60) in Kommunikationsverbindung bringbar ist, um Rettungsmaßnahmen, Unterstützungsmaßnahmen, versorgungsmaßnahmen oder dergleichen einzuleiten, gekennzeichnet dadurch, dass die Notrufsendeeinrichtung (20) zumindest einen elektronischen Chip oder elektronische Chipkarte/ SIM-Karte aufweist, der/die so ausgebildet ist, dass sie im Notfall bei Aktivierung wahlweise eine Kommunikationsverbindung selektiv aus einer Vielzahl von Mobilfunknetzen auswählbar und herstellbar ist, wahlweise eine Kommunikationsverbindung über ein terrestrischen Funknetz (16) herstellbar ist, wahlweise eine Kommunikationsverbindung über ein Satellitenfunknetz (14) herstellbar ist, eine Prüf- und Auswahleinrichtung vorhanden ist, die die Empfangsqualität der Mobilfunknetze (12.1, 12.2, 12.3) überprüft und auswertet und das Netz mit der optimalsten Empfangsqualität zum Absenden der Notrufsignale auswählt oder falls kein Mobilfunknetz (12.1, 12.2, 12.3) empfangen werden kann, eine Verbindung über das terrestrische Funknetz (16) oder Satellitenfunknetz (14) auswählt.

## Beschreibung

### TECHNISCHES GEBIET

Die vorliegende Erfindung betrifft eine mobile Kommunikationseinrichtung mit einer Notrufsendeeinrichtung zur Absendung von Notrufsignalen in einem Notfall, wobei die Notrufsignale der Notrufsendeeinrichtung mit einer Notrufempfangseinrichtung zum Empfangen und Auswerten der Notrufsignale in Kommunikationsverbindung bringbar sind und die Notrufempfangseinrichtung mit einer Notrufhilfeeinrichtung in Kommunikationsverbindung bringbar ist, um Rettungsmaßnahmen, Unterstützungsmaßnahmen oder dergleichen einzuleiten.

### STAND DER TECHNIK

Es sind mobile Kommunikationseinrichtungen wie beispielsweise Handys bekannt, die eine Notrufsendeeinrichtung aufweisen, bei deren Aktivierung ein Notrufsignal an Notrufempfangseinrichtungen abgesandt wird. Ein Problem besteht jedoch darin, dass Mobilfunknetze nicht flächendeckend empfangsbereit sind, so dass es im Falle eines Notfalls sein kann, dass ein Notruf wegen mangelnden Empfangs eines Mobilfunknetzes nicht die Notrufempfangseinrichtung erreicht.

Es sind weiterhin mobile Kommunikationseinrichtungen bekannt, die im Notfall eine Kommunikationsverbindung mit der Notrufempfangseinrichtung herstellen können, die auf einer Satellitenfunktechnologie beruhen. Derartige Kommunikationseinrichtungen sind unabhängig von den jeweiligen Mobilfunknetzen und gewährleisten eine Verbindung über Satellit in jeder Notrufsituation.

Damit ist eine Erreichbarkeit jederzeit gegeben und die Absendung von Notrufsignalen ortsunabhängig gewährleistet.

Des Weiteren sind mobile Kommunikationseinrichtungen bekannt, die auf Grundlage es terrestrischen Funknetzes eine Kommunikationsverbindung herstellen können, die insbesondere auch im Notfall genutzt werden kann.

In einem Notfall ist es von großer Wichtigkeit, dass die Notrufempfangseinrichtung jederzeit über ein entsprechendes Funksystem erreichbar ist, Informationen über die aktuelle Notfallsituation bezüglich Position und sonstiger unfallspezifischer Merkmale übermittelt werden können, um geeignete Rettungsmaßnahmen unverzüglich einzuleiten.

### DARSTELLUNG DER ERFINDUNG

Ausgehend von dem genannten Stand der Technik liegt der vorliegenden Erfindung das technische Problem beziehungsweise die Aufgabe zugrunde, eine mobile Kommunikationseinrichtung anzugeben, die garantiert, dass in jedem Notruffall eine Verbindung zu einer Notrufempfangseinrichtung hergestellt werden kann, die einfach zu bedienen ist und gegebenenfalls für einen Notfall automatische sicherheitsrelevante Abläufe gewährleistet, und die insbesondere im Einsatz innerhalb von Fahrzeugen in Unfall- oder Gefährdungssituationen die Sicherheit erhöht.

Die erfindungsgemäße mobile Kommunikationseinrichtung ist durch die Merkmale des unabhängigen Anspruchs 1 gegeben. Vorteilhafte Ausgestaltungen und Weiterbildungen der erfindungsgemäßen mobilen Kommunikationseinrichtung sind durch die Merkmale der von dem unabhängigen Anspruch 1 direkt oder indirekt abhängigen Ansprüche angegeben.

Die erfindungsgemäße mobile Kommunikationseinrichtung zeichnet sich demgemäß dadurch aus, dass die Notrufsendeeinrichtung zumindest einen elektronischen Chip oder elektronische Chipkarte/ SIM-Karte aufweist, der/die so ausgebildet ist, dass sie im Notfall bei Aktivierung wahlweise eine Kommunikationsverbindung selektiv aus einer Vielzahl von Mobilfunknetzen herstellbar ist, wahlweise eine Kommunikationsverbindung über ein terrestrischen Funknetz herstellbar ist, wahlweise eine Kommunikationsverbindung über ein Satellitenfunknetz herstellbar ist, eine Prüf- und Auswahleinrichtung vorhanden ist, die die Empfangsqualität der Mobilfunknetze überprüft und auswertet und das Netz mit der optimalsten Empfangsqualität zum Absenden der Notrufsignale auswählt oder falls kein Mobilfunknetz empfangen werden kann, eine Verbindung über das terrestrische Funknetz oder Satellitenfunknetz auswählt.

Dadurch, dass die mobile Kommunikationseinrichtung wahlweise auf eine Vielzahl von Mobilfunknetzen, ein terrestrisches Funknetz oder ein Satellitenfunknetz durch Ausbildung eines entsprechenden elektronischen Chips oder einer entsprechenden elektronischen Chipkartenstruktur herstellen kann, ist es durch Einsatz einer erfindungsgemäßen Prüf- und Auswahleinrichtung garantiert, dass im Notfall auf jeden Fall eine Notrufempfangseinrichtung erreicht werden kann, wodurch Rettungsmaßnahmen effizient und in kurzer Zeit initiiert werden können, um die Versorgung und Sicherheit für die in der Notfallsituation befindliche/ n Person/ en schnell zu gewährleisten.

Erfindungsgemäß ist somit wesentlich, dass die Notrufsendeeinrichtung in Verbindung mit der Prüf- und Auswahleinrichtung gewährleistet, dass jederzeit, an jedem Ort ein Notruf abgesetzt werden kann, der garantiert eine Notrufempfangseinrichtung erreicht, um entsprechende Rettungsmaßnahmen oder Unterstützungsmaßnahmen oder dergleichen einzuleiten.

Eine besonders bevorzugte Ausgestaltung der mobilen Kommunikationseinrichtung, die eine hohe Funktionalität und Zuverlässigkeit gewährleistet, zeichnet sich dadurch aus, dass die Notrufsignale als terrestrische Funksignale im UKW-Bereich, insbesondere im Bereich von 87,5 MHz bis 108 MHz, oder im Mittelwellenbereich, insbesondere im Bereich von 300 kHz bis 3.000 kHz, oder im Kurzwellenbereich, insbesondere im Bereich 3 MHz bis 30 MHz, oder im Langwellenbereich, insbesondere im Bereich 148,5 kHz bis 283,5 kHz, oder im CB-Funkbereich, insbesondere im Bereich zwischen circa 26 und 28 MHz, ausgebildet sind.

Eine besonders vorteilhafte Weiterbildung der erfindungsgemäßen mobilen Kommunikationseinrichtung zeichnet sich dadurch aus, dass die Notrufsendeeinrichtung so ausgebildet ist, dass sie auf weitere Dateninformationen zugreifen kann und die gesendeten Notrufsignale die weiteren Dateninformationen enthalten, wie beispielsweise Ortungsdaten, persönliche Daten der Sendeperson oder dergleichen, die in elektronischer Form gespeichert vorliegen und/ oder permanent aktualisiert vorliegen.

Dadurch, dass die Notrufsendeeinrichtung auf weitere Dateninformationen zugreifen kann, die im Notfall entsprechend übermittelt werden können, wird beispielsweise eine sichere Ortung gewährleistet, damit die Rettungskräfte ihren Einsatzort unverzüglich anfahren können. Gleichzeitig können über die persönlichen Daten der Sendeperson im Notfall personenspezifische Daten mit übertragen werden, die bereits gespeichert vorliegen und abrufbar sind und von der Notrufsendeeinrichtung abgerufen werden und gesendet werden oder permanent aktualisiert werden und ebenfalls von der Notrufsendeeinrichtung übernommen und gesendet werden. Dies können beispielsweise Daten sein über den jeweils aktuellen Gesundheitszustand der Sendeperson im Notzustand, beispielsweise momentane Herzfrequenz, Atemfrequenz oder dergleichen, was die Effizienz der durch den Notruf aktivierten vorzubereitenden Rettungsmaßnahmen deutlich verbessert.

Eine weitere vorteilhafte Ausgestaltung zeichnet sich dadurch aus, dass die Notrufempfangseinrichtung/ Notrufsendeeinrichtung so ausgebildet ist, dass im Notfall bei Aktivierung eine Gesprächsverbindung mit der Notrufempfangseinrichtung herstellbar ist und/oder eine Sprachaufnahme erfolgt.

Diese spezifische Ausgestaltung ist insbesondere dahingehend vorteilhaft, dass sich in Notfallsituationen die entsprechenden Personen häufig im Schockzustand befindet und es erforderlich ist, dass diese Personen in einem Gespräch mit den informierten Rettungseinrichtungen eine Beruhigung ausgeübt werden kann oder weitere Informationen oder Hinweise mitgeteilt werden, die bei der entsprechenden Behandlung der vorliegenden Situation hilfreich sind.

Eine besonders bevorzugte Ausgestaltung der mobilen Kommunikationseinrichtung zeichnet sich dadurch aus, dass die Notrufsendeeinrichtung so ausgebildet ist, dass sie im Notfall bei Aktivierung parallel eine SMS-Nachricht an die Notrufempfangseinrichtung sendet. Die Absendung einer SMS-Nachricht hat den Vorteil, dass diese beim Empfänger automatisch die Position der abgesendeten SMS-Nachricht anzeigt, so dass informierte Notrufempfangseinrichtungen eine exakte Ortung durchführen können, um Notfallrettungsmaßnahmen einzuleiten.

Eine weitere alternative Ausgestaltung zeichnet sich dadurch aus, dass die Notrufsendeeinrichtung so ausgebildet ist, dass sie im Notfall eine vorhandene Positionssendeeinheit aktiviert. Durch die Aktivierung der Positionssendeeinheit ist die Notrufempfangseinheit permanent über die jeweils aktuelle Position des Notrufstandorts informiert.

Eine besonders bevorzugte Ausgestaltung der mobilen Kommunikationseinrichtung zeichnet sich dadurch aus, dass die Kommunikationseinrichtung eine manuell betätigbare Schalteinheit aufweist, die die Absendung von Notsignalen bei Betätigung automatisch in dem bezüglich eines optimalen Empfang zur Verfügung stehenden Funknetzes auslöst und/ oder eine Kommunikationsverbindung per Mobilfunknetz, terrestrischen Funknetz oder Satellitenfunknetz automatisch herstellt. Eine derartige Ausgestaltung erlaubt, dass die sich im Notfall befindliche Person, sofern sie noch bei Bewusstsein sein ist und im vollen Besitz ihrer Kräften, eine Benachrichtigung der Notrufempfangseinrichtung gemäß ihrem freien Willen ermöglicht und gegebenenfalls Gespräche geführt werden können.

Die erfindungsgemäße mobile Kommunikationseinrichtung ist in einem bevorzugte Ausführungsbeispiel in einem Fahrzeug angeordnet beziehungsweise bildet einen Teil des Kommunikationssystems des Fahrzeugs.

Eine weitere besonders vorteilhafte Ausgestaltung der erfindungsgemäßen Kommunikationseinrichtung, insbesondere im Einsatz in Fahrzeugen, zeichnet sich dadurch aus, dass in der Umgebung der Kommunikationseinrichtung zumindest eine Sensoreinheit vorhanden ist, die mit der Notrufsendeeinrichtung in Kommunikationsverbindung steht und bei deren Aktivierung Notrufsignale abgebbar sind oder automatisch abgegeben werden oder wahlweise Verbindungen zu Funknetzen hergestellt werden.

Da im Falle einer Notsituation/ Unfalls eines Fahrzeugs die Sicherheit durch vielfältige Maßnahmen erhöht werden kann, wobei es sein kann, dass die Fahrzeugpersonen diese Sicherheit auslösenden Elemente nicht selbst ausführen können, zeichnet sich eine vorteilhafte Ausgestaltung dadurch aus, dass eine manuell oder automatisch über die Sensoreinheit/ en ansteuerbare Aktivierungs- beziehungsweise Deaktivierungseinheit vorhanden ist, die im Notfall/Bedarfsfall weitere Aktivierungsprozesse/ Deaktivierungsprozesse in der Umgebung der Kommunikationseinrichtung einleitet.

Eine besonders bevorzugte Ausgestaltung der mobilen Kommunikationseinrichtung, insbesondere innerhalb des Einsatzes in einem Fahrzeug, zeichnet sich dadurch aus, dass die Sensoreinheit als Unfallsensor oder Airbagsensor ausgebildet ist, die aufgrund gemessener physikalischer Größen feststellt, ob eine Umfallsituation eines Fahrzeugs gegeben ist und dann in den Aktivierungszustand übergeht und Aktivierungs- beziehungsweise Deaktivierungsprozesse einleitet.

Physikalische Größen, die eine Aktivierung des Senors auslösen, können beispielsweise unübliche Beschleunigungswerte, unübliche Temperaturen, die Auslösung eines Airbags innerhalb des Fahrzeugs oder dergleichen sein.

In besonderen vorteilhaften Ausgestaltungen kann die Aktivierungsbeziehungsweise Deaktivierungseinrichtung im Notfall bedarfsweise automatisch die Warnblinkanlage des Fahrzeugs aktivieren, die Energiezufuhr des Fahrzeugaggregats, insbesondere des Verbrennungsmotors oder Elektromotors oder Wasserstoffmotors, unterbrechen oder beispielsweise bei Fahrzeugen mit Tankeinrichtungen, in denen flüssige Energie gespeichert wird, bedarfsweise automatisch eine Speichereinrichtung zur Abgabe eines Speichermediums in den Tank des Fahrzeugs aktivieren, das die Viskosität des Kraftstoffs beziehungsweise Energiemediums erhöht.

Weiterhin kann die Aktivierungs- beziehungsweise Deaktivierungseinrichtung im Notfall auch im Bereich des Fahrzeugaggregats Materialien zugeben, die einer Entstehung eines Brandes entgegenwirken.

Eine besonders bevorzugte Ausgestaltung zeichnet sich dadurch aus, dass die Aktivierungs- beziehungsweise Deaktivierungseinrichtung im Notfall bedarfsweise automatisch Sicherheitsgurtschlösser oder Fahrzeugschlösser des Fahrzeugs gelöst oder gegebenenfalls durch Zerstörung gelöst werden, wobei diese Aktivierung bevorzugt über die Sensoreinheit aktiviert wird, sofern innerhalb des Fahrzeugs eine Auslösung eines Airbags erfolgt ist.

Eine besonders bevorzugte Ausgestaltung, die die Sicherheit während des Fahrbetriebs im Falle einer Unfallsituation erhöht, zeichnet sich dadurch aus, dass die Sensoreinheit eine Bilderkennungseinheit aufweist, die erkennt, ob sich dem Fahrzeug ein Fahrzeug mit aktivierten Blaulicht und/ oder Martinshorn nähert und daraufhin eine Anzeigeeinheit aktiviert, die eine optische und/ oder akustische Anzeige aktiviert, die zur Bildung einer Rettungsgasse auffordert. Dies gilt auch für nachfolgende Fahrzeuge, bei denen eine derartige Kommunikationseinrichtung vorhanden ist.

Eine besonders bevorzugte Weiterbildung der erfindungsgemäßen Kommunikationseinrichtung zeichnet sich dadurch aus, dass die Notrufsendeeinrichtung so ausgebildet ist, dass im Notfall bei Aktivierung automatisch eine vorgebbare Telefon-/ Handynummer angerufen wird.

Dadurch können beispielsweise Verwandte oder Bekannte oder besonders qualifizierte Personen direkt über die Notfallsituation informiert werden und weitere Rettungsmaßnahmen einleiten.

Eine besonders vorteilhafte Ausgestaltung, die einen wirtschaftlichen Einsatz mobilen Kommunikationseinrichtung gewährleistet zeichnet sich dadurch aus, dass die Notrufsendeeinrichtung als in der mobilen Kommunikationseinrichtung nachrüstbare Einheit ausgebildet ist.

Eine besonders vorteilhafte Ausgestaltung, die in Extremsituationen eine zuverlässige Absendung eines Notsignals gewährleistet, zeichnet sich dadurch aus, dass die Prüf- und Auswahleinrichtung so ausgebildet ist, dass terrestrische Funkverbindungen oder Mobilfunkverbindungen oder Satellitenfunkverbindungen zu Rettungs-/ Polizei-/ Feuerwehrdienststellen herstellbar sind. Insbesondere bei der Hestellung von Funkverbindungen im Kurzwellenbereich können beispielsweise vorhandene Funkanlagen, zum Beispiel in technisch entsprechend ausgerüsteten öffentlichen Gebäuden, Schulen, Krankenhäusern, Arbeitsämtern, genutzt werden oder die Funkverbindung kann über mit Funk verbundenen Behördenfahrzeugen verstärkt und optimiert werden und der Notrufempfangseinrichtung zugeführt werden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung einer in einem Fahrzeug angeordneten mobilen Kommunikationseinrichtung mittels derer eine Kommunikationsverbindung wahlweise zu einer Vielzahl von Funknetzen aufgebaut werden kann, um in einem Notfall Notrufsignale abzusenden,
- Fig. 2: stark schematisierte Darstellung einer Kommunikationseinrichtung mit einer Notrufsendeeinrichtung, einer Prüf- und Auswahleinrichtung, die mit Sensoreinheiten und einer Informationsspeichereinheit in Kommunikationsverbindung steht und
- Fig. 3: stark schematisierte Darstellung eines Fahrzeugs mit einer Kommunikationseinrichtung nach Fig. 2 mit möglicher Initialisierung von Aktivierungs- beziehungsweise Deaktivierungsprozesse innerhalb eines Fahrzeugs zur Erhöhung der Sicherheit in einer Not-/ Unfallsituation

### WEGE ZUM AUSFÜHREN DER ERFINDUNG

Eine mobile Kommunikationseinrichtung 10 weist eine Notrufsendeeinrichtung 20 auf, die im dargestellten Ausführungsbeispiel mit drei Mobilfunknetzen 12.1, 12.2, 12.3 mit entsprechenden Funksignalen H1, H2, H3 kommunizieren kann. Die Mobilfunknetze 12.1, 12.2, 12.3 können beispielsweise in Deutschland als D1-, D2- oder E-Netz ausgebildet sein. Über die Mobilfunknetze 12.1, 12.2, 12.3 kann eine Kommunikationsverbindung mit einer Notrufempfangseinrichtung 40 hergestellt werden, die mit einer Hilfeeinrichtung 60 kommuniziert, die daraufhin entsprechende Sofortmaßnahmen bezüglich der unverzüglichen Behandlung der vorliegenden Notfallsituation einleitet.

Neben dem Aufbau einer Kommunikationsverbindung mit den Mobilfunknetzen 12.1, 12.2, 12.3 kann die Kommunikationseinrichtung 10 auch eine Kommunikationsverbindung über ein Satellitennetz 14 mittels der Funksignale S oder über ein terrestrisches Funknetz 16 mittels der Funksignale F, welche in Ultrakurzwellen-, Kurzwellen-, Langwellen- oder Mittelwellenbereich liegen, aufgebaut werden. Auch über diese beiden Funknetze 14, 16 ist im Notruffall eine Kommunikationsverbindung mit der Notrufempfangseinrichtung 40 möglich.

Welches Funknetz die Notrufverbindung aufgebaut wird, hängt von dem jeweiligen Ort des Notfalls und der Qualität der an diesem Ort zur Verfügung stehenden Funknetze ab. Normalerweise wird der Notruf über ein Mobilfunknetz gesendet. Es bestehen jedoch an bestimmten Orten beziehungsweise in bestimmten Gebieten Bereiche in denen ein bestimmtes Mobilfunknetz nicht zur Verfügung steht.

Hier ist die Kommunikationseinrichtung 10 in der Lage die im Ausführungsbeispiel möglichen drei Mobilfunknetze 12.1, 12.2, 12.3 in der jeweiligen Notfallsituation auf Empfangsbereitschaft zu prüfen und dasjenige Mobilfunknetz auszuwählen, das den besten Empfang an dieser Position gewährleistet.

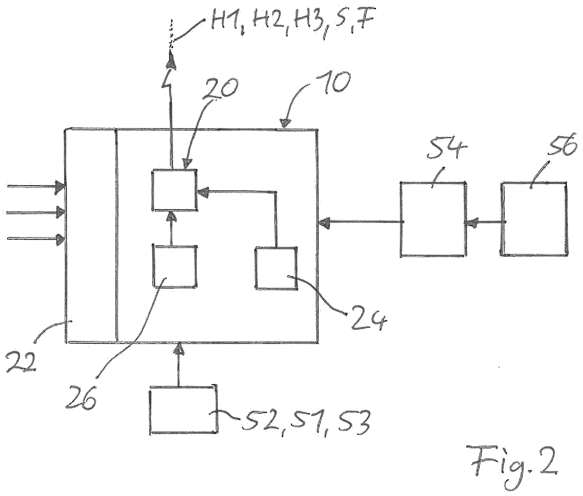

Hierzu weist die Kommunikationseinrichtung 10 eine Prüf- und Auswahleinrichtung 22 (siehe Fig. 2) auf, die diese Überprüfung fallweise vornimmt und die mit der Notrufsendeeinrichtung 20 in Kommunikationsverbindung steht und im Notfall die Sendung eines Notrufsignals über das Mobilfunknetz 12.1, 12.2. 12.3 veranlasst, das am Notrufort den besten Empfang aufweist.

Falls die Prüf- und Auswahleinrichtung 22 feststellt, dass kein Mobilfunknetz an dem Notfallort zur Verfügung steht, prüft die Prüf- und Auswahleinrichtung 22, ob eine Funkverbindung über das terrestrische Funknetz 16 in Frequenzbereichen KW, UKW, LW oder MW möglich ist. Falls ja, veranlasst die Prüf- und Auswahleinrichtung 22 dass das Notrufsignal über dieses Funknetz 16 gesendet wird.

Falls eine Kommunikationsverbindung über dieses Funknetz 16 nicht möglich ist, veranlasst die Prüf- und Auswahleinrichtung 22, dass die Notrufsendeeinrichtung 20 Notrufsignale über das Satellitenfunknetz 14 sendet, wodurch in jedem Fall gewährleistet ist, dass die Notrufsignale in der Notrufsendeeinrichtung 20 ankommen, da das Satellitenfunknetz 14 ortsunabhängig überall Empfang gewährleistet.

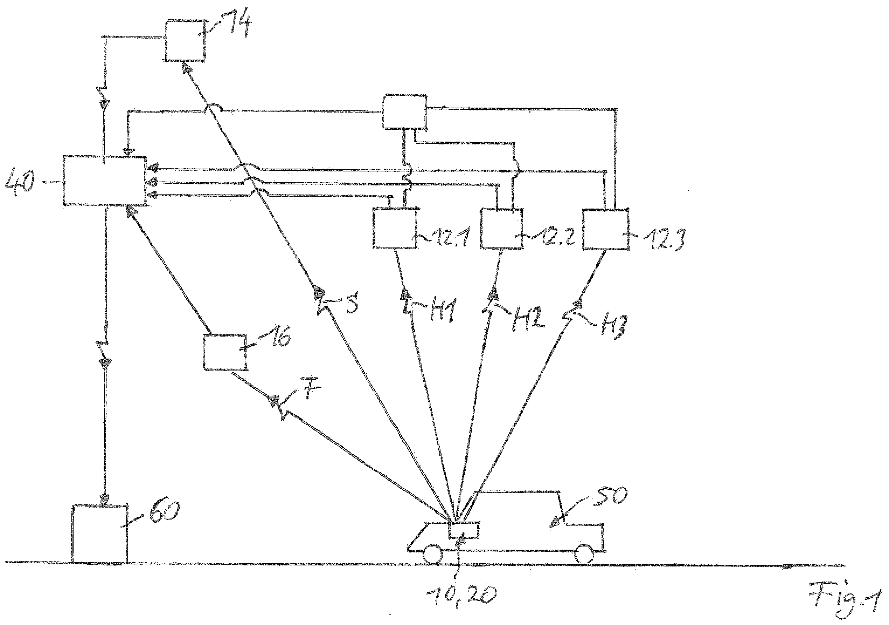

Wie in der Fig. 1 weiter ersichtlich, steht die Kommunikationseinrichtung 10 mit Sensoreinheiten 51, 52, 53 in Kommunikationsverbindung, wobei die Sensoreinheit 51 als Bilderkennungssensor, die Sensoreinheit 52 als Unfallsensor und die Sensoreinheit 53 als Airbagsensor ausgebildet sein kann, um einige Beispielsfälle zu nennen.

Die Notrufsendeeinrichtung 20 kann in Abhängigkeit der durch die Sensoreinheiten 51, 52, 53 detektierte Signale bedarfsweise aktiviert werden.

Grundsätzlich ist es möglich, dass ein Notruf automatisch bei ansprechender Sensoreinheit 52, 53 abgesandt wird. Es ist jedoch auch möglich, dass die Person, die sich in einer Notsituation befindet, den Notruf manuell aktiviert, indem sie eine an der Kommunikationseinrichtung 10 vorhandene Schaltereinheit 24 aktiviert.

Weiterhin steht die Kommunikationseinrichtung noch mit einer Informationsspeichereinheit 54 in Kommunikationsverbindung, auf der weitere Informationsdaten gespeichert sind, die fest vorgegeben sein können und/ oder permanent aktualisiert werden, wie beispielsweise individuelle Daten oder aktuelle Gesundheitsdaten der Person, die sich in der Notsituation befindet oder beispielsweise auch aktuelle technische Informationsdaten betreffend eines sich in der Notsituation befindlichen Fahrzeugs.

Die Informationsspeichereinheit 54 steht weiterhin mit einer Sensoreinheit 56 in Kommunikationsverbindung, die beispielsweise aktuelle Gesundheitszustandsdaten der Notfallperson ermittelt, die dann jeweils aktuell in der Informationsspeichereinheit 54 abgespeichert werden. Die in der Informationsspeichereinheit 54 zur Verfügung stehenden Informationen können von der Notrufsendeeinrichtung 20 abgegriffen werden und zusätzlich zu dem Notrufsignal gesendet werden, damit die durch die Notrufempfangseinrichtung 40 beziehungsweise Hilfeeinrichtung 60 einzuleitenden Rettungsmaßnahmen gezielt vorbereitet werden können. Die Informationsspeichereinheit 54 kann auch jeweils permanent aktualisierte Daten der Position der Kommunikationseinrichtung 10 abspeichern.

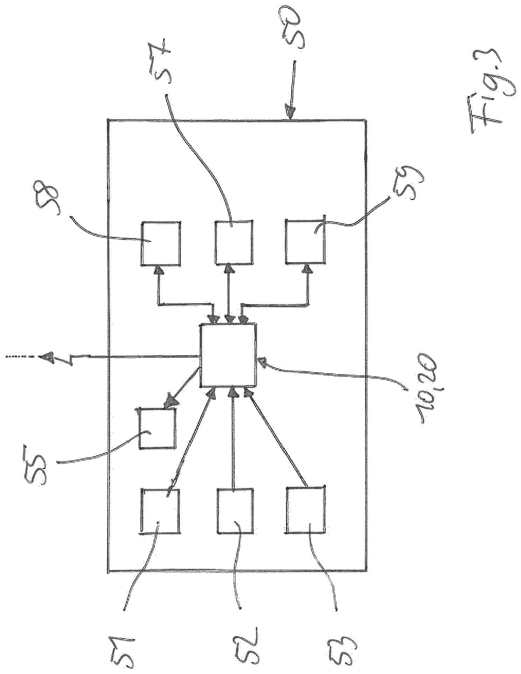

Die Fig. 3 zeigt stark schematisiert den Einsatz einer Kommunikationseinrichtung 10 zum Aufbau einer Notruffunkverbindung im Einsatz eines Fahrzeugs 50. Die mit den Sensoreinheiten 51, 52, 53 in Kommunikationsverbindung stehende Kommunikationseinrichtung 10 beziehungsweise Notrufsendeeinrichtung 20 ist in der Lage Aktivierungs- beziehungsweise Deaktivierungsprozesse im Notfall einzuleiten, wie beispielsweise das automatische Lösen von Gurt- und Türschlössern 58, das Einschalten einer Warnblinkanlage 57 oder die Unterbrechung der Energiezufuhr eines Aggregats 59 des Fahrzeugs 50, um nur einige Beispiele zu nennen.

Grundsätzlich kann die Kommunikationseinrichtung 10 Aktivierungsbeziehungsweise Deaktivierungsprozesse im Notfall in Gang setzen, die die Sicherheit und Versorgung der sich im Notfall befindlichen Person/ en verbessert und ein weiteres eventuell entstehendes Gefahrenpotenzial verhindert oder zumindest verringert.

## Patentansprüche

1. Mobile Kommunikationseinrichtung (10) mit einer Notrufsendeeinrichtung (20) zur Absendung von Notrufsignalen (H1, H2, H3) in einem Notfall, wobei die Notrufsignale der Notrufsendeeinrichtung (20) mit einer Notrufempfangseinrichtung (40) zum Empfangen und Auswerten der Notrufsignale in Kommunikationsverbindung bringbar sind und die Notrufempfangseinrichtung (40) mit einer Hilfeeinrichtung (60) in Kommunikationsverbindung bringbar ist, um Rettungsmaßnahmen, Unterstützungsmaßnahmen, versorgungsmaßnahmen oder dergleichen einzuleiten,
- **dadurch gekennzeichnet, dass**
- die Notrufsendeeinrichtung (20) zumindest einen elektronischen Chip oder elektronische Chipkarte/SIM-Karte aufweist, der/ die so ausgebildet ist, dass sie im Notfall bei Aktivierung
- - wahlweise eine Kommunikationsverbindung selektiv aus einer Vielzahl von Mobilfunknetzen auswählbar und herstellbar ist,
- - wahlweise eine Kommunikationsverbindung über ein terrestrischen Funknetz (16) herstellbar ist,
- - wahlweise eine Kommunikationsverbindung über ein Satellitenfunknetz (14) herstellbar ist,
- eine Prüf- und Auswahleinrichtung (22) vorhanden ist,
- - die die Empfangsqualität der Mobilfunknetze (12.1, 12.2, 12.3) überprüft und auswertet und das Netz mit der optimalsten Empfangsqualität zum Absenden der Notrufsignale auswählt oder
- - falls kein Mobilfunknetz (12.1, 12.2, 12.3) empfangen werden kann, eine Verbindung über das terrestrische Funknetz (16) oder Satellitenfunknetz (14) auswählt.

2. Mobile Kommunikationseinrichtung nach Anspruch 1,
- **dadurch gekennzeichnet, dass**
- die Notrufsignale als terrestrische Funksignale (F) im UKW-Bereich, insbesondere im Bereich von 87,5 MHz bis 108 MHz,
oder
im Mittelwellenbereich, insbesondere im Bereich von 300 kHz bis 3.000 kHz,
oder
im Kurzwellenbereich, insbesondere im Bereich 3 MHz bis 30 MHz,
oder
im Langwellenbereich, insbesondere im Bereich 148,5 kHz bis 283,5 kHz,
oder
im CB-Funkbereich, insbesondere im Bereich zwischen circa 26 und 28 MHz,
ausgebildet sind.

3. Mobile Kommunikationseinrichtung nach Anspruch 1 oder 2,
- **dadurch gekennzeichnet, dass**
- die Notrufsendeeinrichtung (20) so ausgebildet ist, dass sie auf weitere Dateninformationen zugreifen kann und die gesendeten Notrufsignale die weiteren Dateninformationen enthalten, wie beispielsweise Ortungsdaten, persönliche Daten der Sendeperson oder dergleichen, die in elektronischer Form gespeichert vorliegen und/ oder permanent aktualisiert vorliegen.

4. Mobile Kommunikationseinrichtung nach einem oder mehreren der Ansprüche 1 bis 3,
- **dadurch gekennzeichnet, dass**
- die Notrufempfangseinrichtung (40)/Notrufsendeeinrichtung (20) so ausgebildet ist, dass im Notfall bei Aktivierung eine Gesprächsverbindung mit der Notrufempfangseinrichtung herstellbar ist und/ oder eine Sprachaufnahme erfolgt.

5. Mobile Kommunikationseinrichtung nach einem oder mehreren der Ansprüche 1 bis 4,
- **dadurch gekennzeichnet, dass**
- die Notrufsendeeinrichtung (20) so ausgebildet ist, dass sie im Notfall bei Aktivierung parallel eine SMS-Nachricht an die Notrufempfangseinrichtung sendet.

6. Mobile Kommunikationseinrichtung nach einem oder mehreren der Ansprüche 1 bis 5,
- **dadurch gekennzeichnet, dass**
- die Notrufsendeeinrichtung (20) so ausgebildet ist, dass sie im Notfall eine vorhandene Positionssendeeinheit aktiviert.

7. Mobile Kommunikationseinrichtung nach einem oder mehreren der Ansprüche 1 bis 6,
- **dadurch gekennzeichnet, dass**
- die Kommunikationseinrichtung (10) eine manuell betätigbare Schalteinheit (26) aufweist, die die Absendung von Notsignalen automatisch in dem bezüglich eines optimalen Empfang zur Verfügung stehenden Funknetzes auslöst und/ oder eine Kommunikationsverbindung per Mobilfunknetz, terrestrischem Funknetz oder Satellitenfunknetz automatisch herstellt.

8. Mobile Kommunikationseinrichtung nach einem oder mehreren der vorstehenden Ansprüche,
- **dadurch gekennzeichnet, dass**
- die mobile Kommunikationseinrichtung (10) in einem Fahrzeug (50) angeordnet ist.

9. Mobile Kommunikationseinrichtung nach einem oder mehreren der Ansprüche 1 bis 8,
- **dadurch gekennzeichnet, dass**
- in der Umgebung der Kommunikationseinrichtung zumindest eine Sensoreinheit (51, 52, 53) vorhanden ist, die mit der Notrufsendeeinrichtung (20) in Kommunikationsverbindung steht und bei deren Aktivierung Notrufsignale (H1, H2, H3, F, S) abgebbar sind oder automatisch abgegeben werden oder wahlweise Verbindungen zu Funknetzen (12.1, 12.2, 12.3) hergestellt werden.

10. Mobile Kommunikationseinrichtung nach Anspruch 9,
- **dadurch gekennzeichnet, dass**
- eine manuell oder automatisch über die Sensoreinheit/ en ansteuerbare Aktivierungs- beziehungsweise Deaktivierungseinheit vorhanden ist, die im Notfall/ Bedarfsfall weitere Aktivierungsprozesse / Deaktivierungsprozesse in der Umgebung der Kommunikationseinrichtung (10) einleitet.

11. Mobile Kommunikationseinrichtung nach Anspruch 9 oder 10,
- **dadurch gekennzeichnet, dass**
- die Sensoreinheit (52) als Unfallsensor ausgebildet ist, die aufgrund gemessener physikalischer Größen feststellt, ob eine Umfallsituation eines Fahrzeugs gegeben ist und dann in den Aktivierungszustand übergeht und Aktivierungsbeziehungsweise Deaktivierungsprozesse einleitet.

12. Mobile Kommunikationseinrichtung nach Anspruch 10 oder 11,
- **dadurch gekennzeichnet, dass**
- die Aktivierungs- beziehungsweise Deaktivierungseinrichtung im Notfall bedarfsweise automatisch die Warnblinkanlage (57) des Fahrzeugs aktiviert wird.

13. Mobile Kommunikationseinrichtung nach Anspruch 10 oder 11,
- **dadurch gekennzeichnet, dass**
- die Aktivierungs- beziehungsweise Deaktivierungseinrichtung im Notfall bedarfsweise automatisch die Energiezufuhr des Fahrzeugaggregats (59), insbesondere des Verbrennungsmotors oder Elektromotors, unterbrochen wird.

14. Mobile Kommunikationseinrichtung nach Anspruch 10 oder 11,
- **dadurch gekennzeichnet, dass**
- die Aktivierungs- beziehungsweise Deaktivierungseinrichtung im Notfall bedarfsweise automatisch eine Speichereinrichtung zur Abgabe eines Speichermediums in den Tank des Fahrzeugs aktiviert wird, das die Viskosität des Kraftstoffs erhöht.

15. Mobile Kommunikationseinrichtung nach Anspruch 10 oder 11,
- **dadurch gekennzeichnet, dass**
- die Aktivierungs- beziehungsweise Deaktivierungseinrichtung im Notfall bedarfsweise automatisch Sicherheitsgurtschlösser (58) oder Fahrzeugschlösser (58) des Fahrzeugs gelöst oder gegebenenfalls durch Zerstörung gelöst werden.

16. Mobile Kommunikationseinrichtung nach einem oder mehreren der Ansprüche 1 bis 15,
- **dadurch gekennzeichnet, dass**
- die Sensoreinheit eine Bilderkennungseinheit aufweist, die erkennt, ob sich dem Fahrzeug ein Fahrzeug mit aktivierten Blaulicht und/ oder Martinshorn nähert und daraufhin eine Anzeigeeinheit aktiviert, die eine optische und/ oder akustische Anzeige aktiviert, die zur Bildung einer Rettungsgasse auffordert.

17. Mobile Kommunikationseinrichtung nach einem oder mehreren der vorstehenden Ansprüche,
- **dadurch gekennzeichnet, dass**
- die Notrufsendeeinrichtung (20) so ausgebildet ist, dass im Notfall bei Aktivierung automatisch eine vorgebbare Telefon-/ Handynummer angerufen wird.

18. Mobile Kommunikationseinrichtung nach einem oder mehreren der vorstehenden Ansprüche,
- **dadurch gekennzeichnet, dass**
- die Notrufsendeeinrichtung (20) als in der mobilen Kommunikationseinrichtung (10) nachrüstbare Einheit ausgebildet ist.

19. Mobile Kommunikationseinrichtung nach einem oder mehreren der vorstehenden Ansprüche,
- **dadurch gekennzeichnet, dass**
- die Prüf- und Auswahleinrichtung (22) so ausgebildet ist, dass terrestrische Funkverbindungen (F) oder Mobilfunkverbindungen (H1, H2, H3) oder Satellitenfunkverbindungen (S) zu Rettungs-/ Polizei-/ Feuerwehrdienststellen herstellbar sind.
